# EUROPÄISCHE PATENTSCHRIFT

(11) **EP 0 407 870 B1**
(45) Veröffentlichungstag und Bekanntmachung des Hinweises auf die Patenterteilung: **10.12.1997**
(21) Anmeldenummer: 90112732.4
(22) Anmeldetag: 04.07.1990
(51) Int. Cl.: C08F 32/08, C08G 61/08

(54) **Verfahren zur Herstellung von Cycloolefinpolymeren**
Process for preparing cycloolefin polymers
Procédé de préparation de polymères de cyclo-oléfines

(30) Priorität: 08.07.1989 DE 3922546
(43) Veröffentlichungstag der Anmeldung: 16.01.1991
(60) Teilanmeldung: 95115275.0
(73) Patentinhaber: HOECHST AKTIENGESELLSCHAFT, 65926 Frankfurt am Main (DE)
(72) Erfinder: Brekner, Michael-Joachim, Dr., D-6000 Frankfurt am Main (DE); Rohrmann, Jürgen, Dr., D-6237 Liederbach (DE); Spaleck, Walter, Dr., D-6237 Liederbach (DE); Antberg, Martin, Dr., D-6238 Hofheim am Taunus (DE)

(56) Entgegenhaltungen:
- EP-A- 0 283 164
- EP-A- 0 291 970
- EP-A- 0 304 671
- EP-A- 0 316 155
- EP-A- 0 358 103
- DE-A- 3 835 044

## Beschreibung

Die Erfindung bezieht sich auf ein Verfahren zur Herstellung von Homo- und Copolymeren von polycyclischen Olefinen, wobei keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 3 557 072 und US 4 178 424) oder Öffnung der Doppelbindung (vgl. EP 156 464, EP 283 164, EP 291 208, EP 291 970).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Als Katalysator läßt sich bei monocyclischen Olefinen eine stereorigide chirale Metallocenverbindung wie Ethylenbis(indenyl)zirkoniumdichlorid verwenden, wobei die Polymerisation unter Erhalt des Ringes erfolgt (vgl. EP 304 671).

Bei den aus den vorgenannten Druckschriften bisher bekannten Propylencopolymeren liegt die Viskositätszehl unterhalb 20 cm³/g und die Glastemperatur der Copolymeren von Ethylen mit Norbornen übersteigt nicht 100°C.

Aus EP-A-283164 ist ein Verfahren zur Herstellung eines statistischen Cycloolefincopolymeren, das von einer α-Olefinkomponente mit 3 bis 20 Kohlenstoffatomen und einer Cycloolefinkomponente abgeleitet wird, wobei das Copolymer 5 bis 99 Mol-% Einheiten enthält, die sich von der α-Olefinkomponente ableiten und 95 bis 1 Mol-% Einheiten enthält, die sich von der Cycloolefinkomponente ableiten und das Copolymer eine Viskositätszahl gemessen bei 135°C in Dekalin von 0,01 bis 10 dl-g aufweist.

Aus DE-A-3835044 ist ein Verfahren zur Herstellung von Cycloolefincopolymeren bekannt, wobei Homo- und Copolymerisate von polycyclischen Olefinen ohne Ringöffnung mit einer hohen Polymersationsgeschwindigkeit mittels eines Katalysators erhält, welcher aus einer stereorigiden chiralen Metallocenverbindung der Gruppe IVb bis VIb des Periodensystems der Elemente und einem Aluminoxan besteht.

Aus EP-A-316155 ist ein Verfahren zur Herstellung von Polypropylen bekannt, wobei Übergangsmetallverbindungen, die siliciumverbrückte Cyclopentadienyl-Reste aufweisen, als Katalysatorkomponenten verwendet werden.

Es bestand die Aufgabe, ein Verfahren zu finden, welches gestattet, bei der Copolymerisation von polycyclischen Olefinen mit acyclischen Olefinen Polymere mit einer Viskositätszahl größer 20 cm³/g und einer Glastemperatur oberhalb 100°C zu erhalten.

Es wurde gefunden, daß bei der Verwendung eines bestimmten Metallocens als Katalysator die Aufgabe gelöst werden kann.

Die Erfindung betrifft somit ein Verfahren zur Herstellung eines Cycloolefinpolymers durch Polymerisation von 0,1 bis 100 Gew.%, bezogen auf die Gesamtmenge der Monomeren, mindestens eines Monomers der Formeln I, II, III oder IV 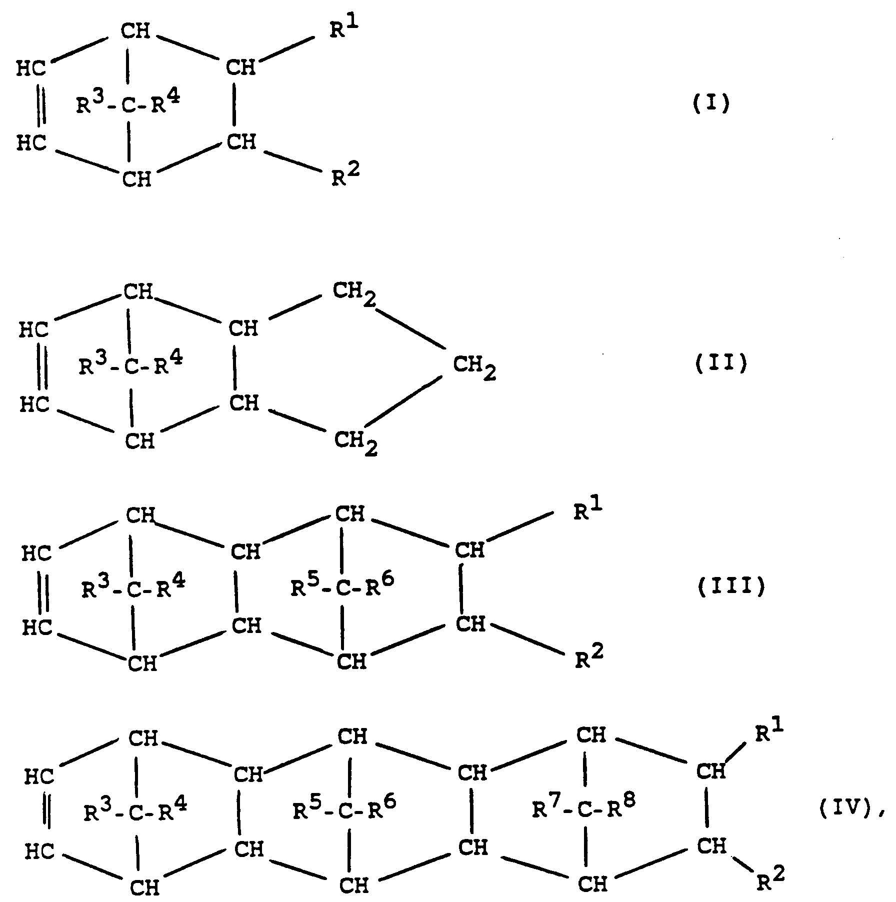 worin R¹ R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel V 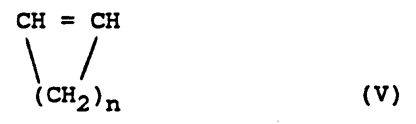 worin n eine Zahl von 2 bis 10 ist, und
0 bis 99,9 Gew.-%, bezogen auf die Gesamtmenge der Monomeren, mindestens eines acyclischen 1-Olefins der Formel VI 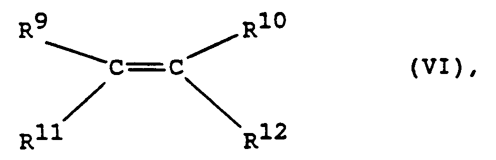 worin R⁹, R¹⁰, R¹¹ und R¹² gleich oder verschieden sind und ein Wasserstoffatom oder einen C₁-C₈-Alkylrest bedeuten, in Lösung, in Suspension oder in der Gasphase, bei einer Temperatur von -78 bis 150°C, bei einem Druck von 0,5 bis 64 bar, in Gegenwart eines Katalysators, welcher aus einem Metallocen als Übergangsmetallkomponente und einem Aluminoxan der Formel VII 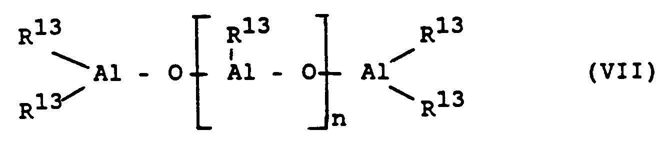 für den linearen Typ und/oder der Formel VIII 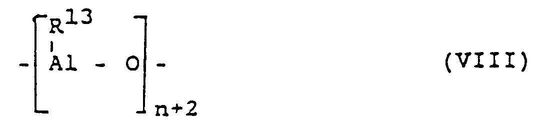 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente mindestens eine Verbindung der Formel IX 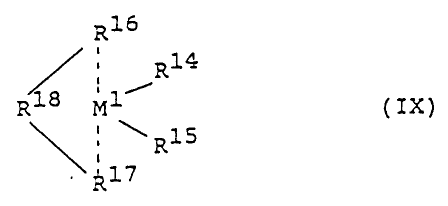 ist, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylaikylgruppe, eine C₇-C₄₀-Alkylarylgruppe oder eine C₈-C₄₀-Arylalkenylgruppe bedeuten,
- R¹⁶ und R¹⁷: gleich oder verschieden sind und einen ein- oder mehrkernigen Kohlenwasserstoffrest, welcher mit dem Zentralatom M¹ eine Sandwichstruktur bilden kann, bedeuten,
- R¹⁸: 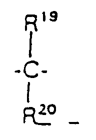 ist, wobei R¹⁹ und R²⁰ gleich oder verschieden sind und ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ jeweils mit den sie verbindenden Atomen einen Ring bilden.

Im erfindungsgemäßen Verfahren wird mindestens ein polycyclisches Olefin der Formeln I, II, III oder IV, vorzugsweise ein Cycloolefin der Formeln I oder III, 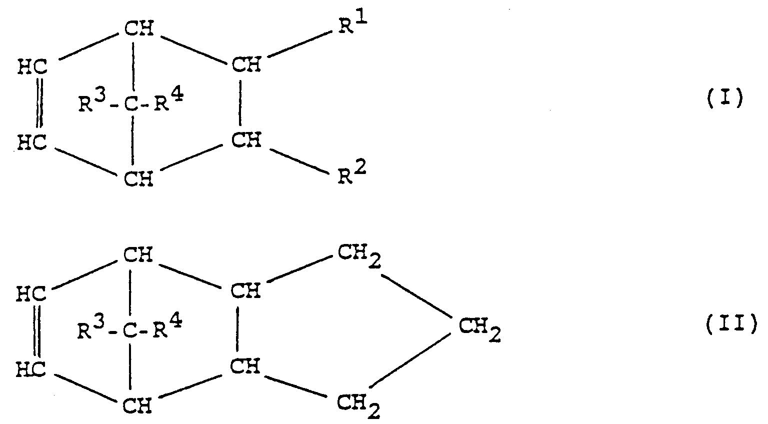 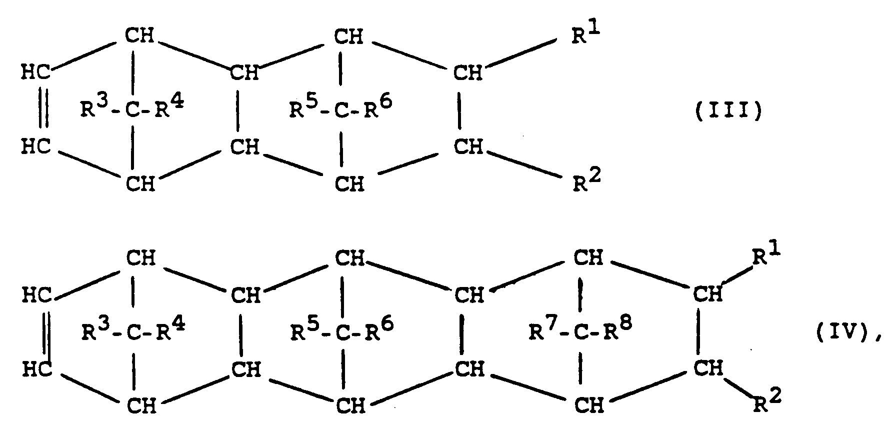 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.
Gegebenenfalls wird auch ein monocyclisches Olefin der Formel V 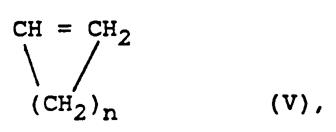 worin n eine Zahl von 2 bis 10 ist, verwendet. Ein anderes Comonomer ist ein acyclisches 1-Olefin der Formel VI, 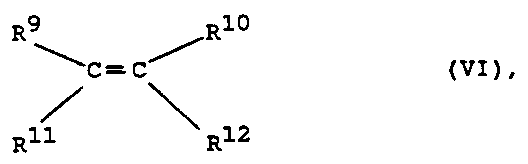 worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen.

Insbesondere werden Copolymere von polycyclischen Olefinen der Formeln I und III hergestellt.

Das polycyclische Olefin (I bis IV) wird in einer Menge von 0,1 bis 100 Gew.-%, das monocyclische Olefin (V) in einer Menge von 0 bis 99,9 Gew.-% und das acyclische 1-Olefin (VI) in einer Menge von 0 bis 99,9 Gew.-%, jeweils bezogen auf die Gesamtmenge der Monomeren, eingesetzt.

Die Monomeren werden vorzugsweise in folgenden Mengenverhältnissen eingesetzt:
a) das molare Monomerverhältnis polycyclisches Olefin (I bis IV) zu 1-Olefin (VI) beträgt in den entsprechenden Polymeren 1 : 99 bis 99 : 1, vorzugsweise 20 : 80 bis 80 : 20;
b) bei Polymeren aus polycyclischen Olefinen (I bis IV) und monocyclischen Olefinen (V) beträgt das Molverhältnis polycyclisches Olefin zu monocyclischem Olefin 10 : 90 bis 90 : 10;
c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93 : 5 : 2 bis 5 : 93 : 2 bis 5 : 5 : 90, d. h. das Molverhältnis liegt innerhalb eines Mischungsdreiecks, dessen Ecken durch die Molverhältnisse 93 : 5 : 2, 5 : 93 : 2 und 5 : 5 : 90 festgelegt sind;
d) in den Angaben a), b) und c) sind als polycyclische Olefine; monocyclische Olefine und 1-Olefine auch Gemische zweier oder mehrerer Olefine des jeweiligen Typs zu verstehen.

Der für das erfindungsgemäße Verfahren zu verwendende Katalysator besteht aus einem Aluminoxan und mindestens einem Metallocen der Formel IX

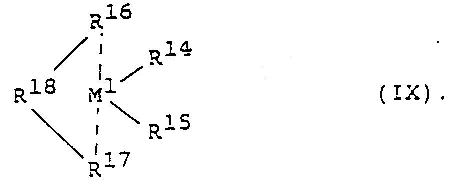

In Formel IX ist M¹ ein Metall aus der Gruppe Titan, Zirkon, Hafnium, Vanadium, Niob und Tantal, vorzugsweise Zirkon und Hafnium.

R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹⁶ und R¹⁷ sind gleich oder verschieden und bedeuten einen ein- oder mehrkernigen Kohlenwasserstoffrest, welcher mit dem Zentralatom M¹ eine Sandwichstruktur bilden kann.

Bevorzugt sind R¹⁶ und R¹⁷ entweder beide Indenyl oder Tetrahydroindenyl oder R¹⁶ Fluorenyl und R¹⁷ Cyclopentadienyl.

R¹⁸ ist eine Brücke, welche die Reste R¹⁶ und R¹⁷ verknüpft und die in Anspruch 1 angegebene Bedeutung hat.

Die Metallocene können nach folgendem Reaktionsschema hergestellt werden:

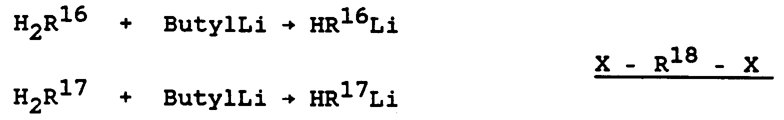

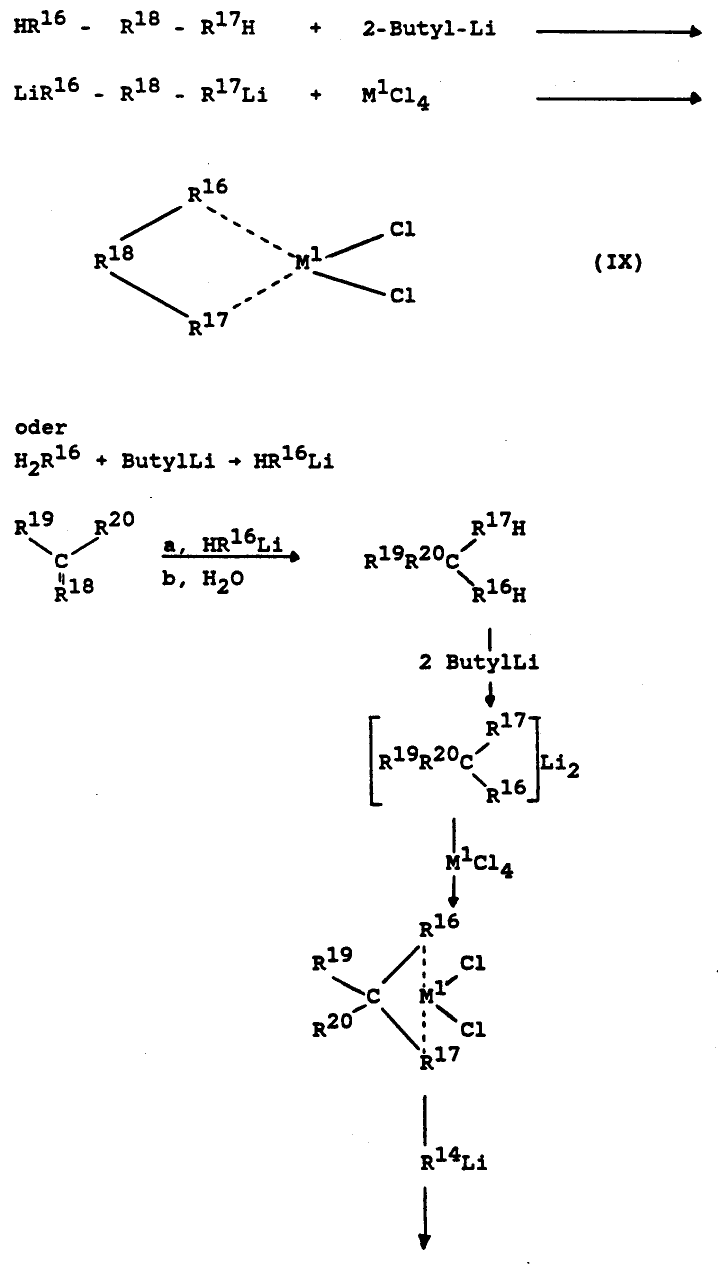

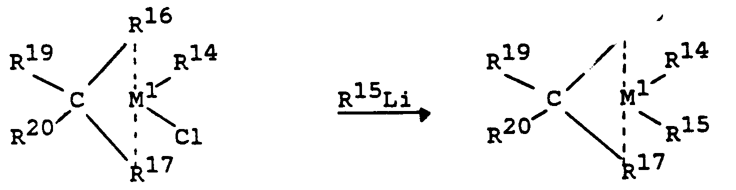

Das obige Reaktionsschema gilt selbstverständlich auch für die Fälle R¹⁶ = R¹⁷ und/oder R¹⁹ = R²⁰ und/oder R¹⁴ = R¹⁵.

Bevorzugt eingesetzte Metallocene sind:
Diphenylmethylen-(9-fluorenyl)-cyclopentadienyl-zirkondichlorid,
Isopropylen-(9-fluorenyl)-cyclopentadienyl-zirkondichlorid oder deren Gemische.

Der Cokatalysator ist ein Aluminoxan der Formel VII 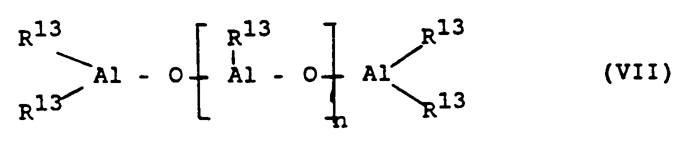 für den linearen Typ und/oder der Formel VIII 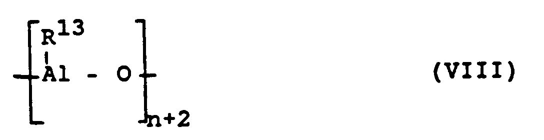 für den cyclischen Typ. In diesen Formeln bedeutet R¹³ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol.

Schließlich kann auch das zu polymerisierende Monomere als Lösemittel oder Suspensionsmittel eingesetzt werden. Im Falle von Norbornen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymerisation wird in bekannter Weise in Lösung, in Suspension oder in der Gasphase, kontinuierlich oder diskontinuierlich, ein- oder mehrstufig bei einer Temperatur von -78 bis 150°C, vorzugsweise -20 bis 80°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Olefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Dabei wird die Metallocenverbindung in einer Konzentration, bezogen auf das Übergangsmetall, von 10⁻³ bis 10⁻⁷, vorzugsweise 10⁻⁵ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 · 10⁻² mol pro dm³ Reaktorvolumen verwendet, bezogen auf den Gehalt an Aluminium. Prinzipiell sind aber auch höhere Konzentrationen möglich. Um die Polymerisationseigenschaften verschiedener Metallocene zu kombinieren, ist es möglich, Gemische mehrerer Metallocene einzusetzen.

Gegenüber dem bekannten Stand der Technik zeichnet sich das erfindungsgemäße Verfahren dadurch aus, daß die bevorzugt verwendeten Zirkoniumverbindungen in verdünnter Lösung sehr temperaturstabil sind, so daß sie auch bei Temperaturen bis 80°C eingesetzt werden können.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comonomer nahezu beliebig steuern. Bei Norbornen wird eine Einbaurate von mehr als 40 mol% erreicht.

Die mittlere Molmasse des gebildeten Copolymers läßt sich durch Variation der Katalysatorkonzentration oder der Temperatur in bekannter Weise variieren.

Die Polydispersität M_{w}/Mₙ der Copolymeren ist mit Werten zwischen 2,9 - 6,0 (4,5) recht eng, unterscheidet sich aber von den Molmassenverteilungen der mit diesem Katalysatorsystem hergestellten Polyethylene und Polypropylene M_{w}/Mₙ = 2 deutlich. Dadurch resultiert ein Eigenschaftbild der Polymerisate, das diese für das Spritzgießen besonders geeignet macht.

Bei der Copolymerisation der polycyclischen Olefine mit den acyclischen Olefinen, insbesondere mit Propylen, entstehen Polymere mit einer Viskositätszahl größer 20 cm³/g. Bei Copolymeren von Norbornen mit acyclischen Olefinen, insbesondere Ethylen, liegt die Glastemperatur oberhalb 100°C.

Mit dem beschriebenen Verfahren lassen sich amorphe Copolymere herstellen. Die Copolymeren sind transparent und hart. Sie sind beispielsweise in Dekahydronaphthalin bei 135°C und in Toluol bei Raumtemperatur löslich. Die erfindungsgemäßen Polymeren sind thermoplastisch verarbeitbar. Sowohl beim Extrudieren als auch beim Spritzgießen wurde kein bemerkenswerter Abbau oder Viskositätsaufbau gefunden.

Die erhaltenen Materialien eignen sich besonders zur Herstellung von Extrüsionsteilen wie Folien, Schläuchen, Rohren, Stangen und Fasern als auch zur Herstellung von Spritzgußartikeln beliebiger Form und Größe. Eine wichtige Eigenschaft der erhaltenen Materialien ist ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,545. Nachdem der Brechungsindex sehr nahe an dem von Kronglas (n = 1,51) liegt, können die erhaltenen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erhaltenen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erhaltenen Polymeren sind folgende Polymere einsetzbar:
Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

### Referenzbeispiel 1

### Darstellung von rac-Dimethylsilyl-bis-(1-indenyl)-zirkondichlorid (Metallocen A)

Alle nachfolgenden Arbeitsoperationen sind in Inertgasatmosphäre unter Verwendung absolutierter Lösemittel durchgeführt worden (Schlenk-Technik).

Eine Lösung von 30 g (0,23 mol) über Aluminiumoxid filtriertem Inden (techn. 91 %) in 200 cm³ Diethylether wurde unter Eiskühlung mit 80 cm³ (0,20 mol) einer 2,5-molaren Lösung von n-Butyllithium in Hexan versetzt. Man rührte den Ansatz noch 15 min bei Raumtemperatur und gab die orangefarbene Lösung über eine Kanüle innerhalb 2 Stunden zu einer Lösung von 13,0 g (0,10 mol) Dimethyldichlorsilan (99 %) in 30 cm³ Diethylether. Die orangefarbene Suspension wurde über Nacht gerührt und dreimal mit 100 - 150 cm³ Wasser ausgeschüttelt. Die gelbe organische Phase wurde zweimal über Natriumsulfat getrocknet und im Rotationsverdampfer eingedampft. Das verbleibende orange Öl wurde 4 bis 5 Stunden im Ölpumpenvakuum bei 40°C gehalten und von überschüssigem Inden befreit, wobei ein weißer Niederschlag ausfiel. Durch Zugabe von 40 cm³ Methanol und Kristallisation bei -35°C ließen sich insgesamt 20,4 g (71 %) der Verbindung (CH₃)₂Si(Ind)₂ als weißes bis beiges Pulver isolieren. Fp. 79 - 81°C (2 Diastereomere).

Eine Lösung von 5,6 g (19,4 mmol) (CH₃)₂Si(Ind)₂ in 40 cm³ THF wurde bei Raumtemperatur langsam mit 15,5 cm³ (38,7 mmol) einer 2,5-molaren Hexan-Lösung von Butyllithium versetzt. 1 Stunde nach Beendigung der Zugabe wurde die tiefrote Lösung innerhalb 4 - 6 Stunden zu einer Suspension von 7,3 g (19,4 mmol) ZrCl₄·2THF in 60 cm³ THF zugetropft. Nach 2 Stunden Rühren wurde der orange Niederschlag über eine Glasfritte abgesaugt und aus CH₂Cl₂ umkristallisiert. Man erhielt 1,0 g (11 %) rac-(CH₃)₂Si(Ind)₂ ZrCl₂ in Form oranger Kristalle, die sich ab 200°C allmählich zersetzen. Korrekte Elementaranalysen. Das E1-Massenspektrum zeigte M⁺ = 448. ¹H-NMR-Spektrum (CDCl₃): 7,04 - 7,60 (m, 8, arom. H), 6,90 (dd, 2, β-Ind H), 6,08 (d, 2, α-Ind H), 1,12 (s, 6, SiCH₃).

### Referenzbeispiel 2 - 9

Die Metallocene B, C, D, E, F, G, H und I gemäß der Tabelle 1 wurden analog Beispiel 1 dargestellt, wobei statt des Dimethyldichlorsilans eine Dihalogenverbindung gemäß der Tabelle 2 und bei den Hafniumverbindungen (Metallocene G, H und I) HfCl₄ anstelle von ZrCl₄ verwendet wurde.

### Referenzbeispiel 10

### Darstellung von Diphenylmethylen(9-fluorenyl)-cyclopentadienyl-zirkondichlorid - (Metallocen L)

Eine Lösung von 5,10 g (30,7 mmol) Fluoren in 60 cm³ THF wurde bei Raumtemperatur mit 12,3 cm³ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 cm³ Wasser zugesetzt, wobei sich die Lösung gelb färbte, und die Lösung ausgeethert. Die über MgSO₄ getrocknete Etherphase wurde eingeengt und bei -35°C der Kristallisation überlassen. Man erhielt 5,1 g (42 %) 1,1-Cyclopentadienyl-(9-fluorenyl)-diphenylmethan als beiges Pulver.

2,0 g (5,0 mmol) der Verbindung wurden in 20 cm³ THF gelöst und bei 0°C mit 6,4 cm³ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvkauum getrocknet und mehrmals mit Hexan gewaschen. Nach dem Trocknen im Ölpumpenvakuum wurde das rote Pulver bei -78°C zu einer Suspension von 1,16 g (5,00 mmol) ZrCl₄ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 cm³ CH₂Cl₂ gewaschen, im Ölpumpenvakuum getrocknet und mit 120 cm³ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35°C der Kristallisation überlassen. Aus CH₂Cl₂ kristallisieren weitere 0,45 g des Komplexes.

Gesamtausbeute 1,0 g (36 %). Korrekte Elementaranalysen. Das Massenspektrum zeigte M⁺ = 556. ¹H-NMR-Spektrum (100 MHz, CDCl₃): 6,90 - 8,25 (m, 16, Flu-H, Ph-H), 6,40 (m, 2, Ph-H), 6,37 (t, 2, Cp-H), 5,80 (t, 2, Cp-H).

### Referenzbeispiel 11

### Darstellung von Isopropylen-(9-fluorenyl)-cyclopentadienylzirkondichlorid - (Metallocen M)

Metallocen M wurde in Anlehnung an die Literaturstelle J. Am. Chem. Soc. 110 (1988) 6255 hergestellt.

### Beispiel 12 (nicht erfindungsgemäß)

Ein sauberer und trockener 1,5 dm³-Polymerisationsreaktor mit Rührer wurde mit Stickstoff und dann mit Ethylen gespült und mit einer Lösung von 25 g Norbornen in 750 cm³ Toluol gefüllt. Unter Rühren wurde dann der Reaktor auf eine Temperatur von 20°C gebracht und 1 bar Ethylen aufgedrückt.

Danach wurden 20 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 20°C gerührt, wobei durch Nachdosieren der Ethylendruck bei 1 bar gehalten wurde (Sättigung des Toluols mit Ethylen). Parallel dazu wurden 30,5 mg Metallocen A in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 1 Stunde bei 20°C polymerisiert, wobei der Ethylendruck durch Nachdosieren bei 1 bar gehalten wurde. Dann wurde der Reaktorinhalt schnell in ein Rührgefäß abgelassen, in dem 100 cm³ Isopropanol vorgelegt waren. Diese Mischung wurde mit 2 dm³ Aceton versetzt, 10 min gerührt und dann der suspendierte polymere Feststoff abfiltriert. Das abfiltrierte Polymer wurde dann in 300 cm³ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80°C und 0,2 bar 15 Stunden getrocknet. Es wurde eine Produktmenge von 55 g erhalten. An dem Produkt wurde eine Viskositätszahl VZ von 244 cm³/g und eine Glastemperatur Tg von 32°C gemessen.

### Beispiele 13 - 16

Es wurden Polymerisationsversuche analog Beispiel 12 durchgeführt. Gegenüber Beispiel 12 wurden variiert:
- Art des eingesetzten Metallocens
- Menge des eingesetzten Metallocens.

Alle anderen Parameter blieben konstant. Variierte Parameter und Polymerisationsergebnisse zeigt Tabelle 3.

### Beispiele 17 - 21 und Vergleichsversuche a und b

Es wurden Polymerisationsversuche analog Beispiel 12 durchgeführt. Gegenüber Beispiel 12 wurden variiert:
- Art des eingesetzten Metallocens
- Menge des eingesetzten Metallocens
- Art des Lösemittels für Norbornenlösung
- Menge des eingesetzten Norbornens
- Polymerisationszeit (t)
- Polymerisationstemperatur (T)
- Ethylendruck (p).

Alle anderen Parameter blieben konstant. Variierte Parameter und Polymerisationsergebnisse zeigt Tabelle 4.

### Beispiel 22 (nicht erfindungsgemäß)

Die Polymerisation wurde gemäß Beispiel 12 durchgeführt mit dem Unterschied, daß anstatt Ethylen Stickstoff eingesetzt wurde und anstatt 25 g Norbornen eine Mischung aus 94,16 g Norbornen und 84,16 g 4-Methyl-1-penten eingesetzt wurde. Weiterhin abweichend von Beispiel 12 wurden 61,4 mg Metallocen A eingesetzt und die Polymerisationszeit war 3 Stunden. Es wurden 3,5 g Produkt mit einer Glastemperatur von 80°C erhalten.

### Beispiel 23 (nicht erfindungsgemäß)

Die Polymerisation wurde gemäß Beispiel 12 durchgeführt mit dem Unterschied, daß anstatt Norbornen eine Mischung aus 94,16 g Norbornen und 84,16 g 4-Methyl-1-penten eingesetzt wurde. Weiterhin abweichend von Beispiel 12 wurden 62,2 mg Metallocen A eingesetzt und die Polymerisationszeit war 3 Stunden. Es wurden 11,8 g Produkt mit einer Glastemperatur von 55°C erhalten.

### Beispiel 24 (nicht erfindungsgemäß)

Es wurde ein Polymerisationsversuch analog Beispiel 12 durchgeführt. Die in den Reaktor eingefüllte Norbornenlösung war jedoch eine Lösung von 15 g Norbornen in 750 cm³ Hexan; es wurden 29,6 mg Metallocen eingesetzt. Man erhielt 8 g Polymeres mit VZ = 116 cm³/g und Tg = 36°C.

### Beispiel 25 (nicht erfindungsgemäß)

Ein sauberer und trockener 1,5 dm³-Polymerisationsreaktor mit Rührer wurde mit Stickstoff und dann mit Propylen gespült und mit einer Lösung von 30 g Norbornen in 750 cm³ Toluol gefüllt. Unter Rühren wurde dann der Reaktor auf eine Temperatur von 20°C gebracht und 1 bar Propylen aufgedrückt. Danach wurden 20 cm³ toluolische Methylaluminoxanlösung (10,1 Gew.-% Methylaluminoxan mit Molmasse 1 300 g/mol nach kryoskopischer Bestimmung) in den Reaktor dosiert und die Mischung 15 min bei 20°C gerührt, wobei durch Nachdosieren der Propylendruck bei 1 bar gehalten wurde (Sättigung des Toluols mit Propylen). Parallel dazu wurden 30,9 mg Metallocen A in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 3 Stunden bei 20°C polymerisiert, wobei der Propylendruck durch Nachdosieren bei 1 bar gehalten wurde. Dann wurde der Reaktorinhalt schnell in ein Rührgefäß abgelassen, in dem 100 cm³ Isopropanol vorgelegt waren. Diese Mischung wurde mit 2 dm³ Aceton versetzt, 10 min gerührt und dann der suspendierte polymere Feststoff abfiltriert. Das abfiltrierte Polymer wurde dann in 300 cm³ einer Mischung aus zwei Teilen 3-normaler Salzsäure und einem Teil Ethanol gegeben und diese Suspension 2 Stunden gerührt. Dann wurde die gerührte Mischung mit 200 cm³ Toluol versetzt und nach weiteren 5 min Rühren die toluolische Phase abgetrennt, mit 1 dm³ Aceton-versetzt. Das durch Extraktion der salzsauren Mischung in Toluol gelöste Polymere wurde so ausgefällt. Der ausgefällte polymere Feststoff wurde dann abfiltriert und bei 80°C und 0,2 bar 15 h getrocknet.

Es wurde eine Produktmenge von 5,4 g erhalten. An dem Produkt wurde eine Viskositätszahl VZ = 23 cm³/g und eine Glastemperatur Tg = 96,6°C gemessen.

### Beispiele 26 - 37

Es wurden Polymerisationsversuche analog Beispiel 19 durchgeführt. Gegenüber Beispiel 19 wurden variiert:
- Art des eingesetzten Metallocens
- Menge des eingesetzten Metallocens.
- Menge des eingesetzten Norbornens
- Polymerisationstemperatur (T).

In Verusch 28 - 30 wurde eine toluolische Methylaluminoxanlösung mit 10,3 Gew.-% Methylaluminoxan mit Molmasse 750 g/mol nach kryoskopischer Bestimmung verwendet. Alle anderen Parameter blieben konstant. Variierte Parameter und Polymerisationsergebnisse zeigt Tabelle 5.

### Beispiel 38 (nicht erfindungsgemäß)

Es wurde ein Polymerisationsversuch analog Beispiel 25 durchgeführt. Die in den Reaktor eingefüllte Norbornenlösung war jedoch eine Lösung von 15 g Norbornen in 750 cm³ Hexan; die eingesetzte Menge an Metallocen A war 31,6 mg und die Polymerisationstemperatur 40°C.

Man erhielt 5,3 g Polymer mit VZ = 7 cm³/g und Tg = 87°C.

### Beispiel 39 (nicht erfindungsgemäß)

Ein sauberer und trockener 1,5 dm³-Polymerisationsreaktor mit Rührer wurde mit Stickstoff und dann mit Propylen gespült und mit einer Lösung von 107 g Norbornen in 750 cm³ Toluol gefüllt. Unter Rühren wurde dann der Reaktor auf eine Temperatur von 20°C gebracht und 1 bar Propylen aufgedrückt. Danach wurden 20 cm³ toluolische Methylaluminoxanlösung (10,1 Gew.-% Methylaluminoxan mit Molmasse 750 g/mol nach kryoskopischer Bestimmung) in den Reaktor dosiert und die Mischung 15 min bei 20°C gerührt, wobei durch Nachdosieren der Propylendruck bei 1 bar gehalten wurde (Sättigung des Toluols mit Propylen). Parallel dazu wurden 64,1 mg Metallocen A in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann 3 Stunden bei 20°C polymerisiert, wobei der Propylendruck durch Nachdosieren bei 1 bar gehalten wurde. Dann wurde der Reaktorinhalt schnell in ein Rührgefäß abgelassen, in dem 100 cm³ Isopropanol vorgelegt waren. Diese Mischung wurde mit 2 dm³ Aceton versetzt, 10 min gerührt und dann der suspendierte polymere Feststoff abfiltriert. Das abfiltrierte Polymer wurde dann in 300 cm³ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80°C und 0,2 bar 15 Stunden getrocknet.

Es wurde eine Produktmenge von 2 g erhalten. An dem Produkt wurde eine Viskositätszahl VZ von 26,1 cm³/g und eine Glastemperatur Tg von 129,5°C gemessen.

### Beispiele 40 - 43

Es wurden Polymerisationsversuche gemäß Beispiel 39 durchgeführt. Gegenüber Beispiel 39 wurden variiert:
- Molekulargewicht des Methylaluminoxans
- Art des eingesetzten Metallocens
- Menge des eingesetzten Metallocens
- Menge des eingesetzten Norbornens
- Propylendruck (P).

Alle anderen Parameter blieben konstant, variierte Parameter und Polymerisationsergebnisse zeigt Tabelle 6.

### Beispiel 44 (nicht erfindungsgemäß)

Es wurde ein Polymerisationsversuch gemäß Beispiel 12 durchgeführt, wobei anstatt Norbornen 110 g 1,4,3,8-Dimethano-1,2,3,4,4a,5,8,8a-octahydronaphthalin und anstatt 30,5 mg 61,5 mg Metallocen A eingesetzt wurden. 17 g Polymer wurde erhalten. An dem Polymer wurde eine Viskositätszahl VZ = 120 cm³/g und eine Glastemperatur Tg = 124°C gemessen.

### Beispiel 45 (nicht erfindungsgemäß)

Es wurde ein Polymerisationsversuch gemäß Beispiel 17 durchgeführt, wobei anstatt Norbornen ein Gemisch aus 94 g Norbornen und 68 g Cyclopenten eingesetzt wurde. 17,4 g Polymer wurden erhalten. An dem Polymer wurde eine Viskositätszahl VZ = 137 cm³/g und eine Glastemperatur Tg = 117°C gemessen.

### Beispiel 46

An zwei Ethylen-Norbornen- Copolymeren, welche eine Glastemperatur von 55 bzw. 115°C sowie eine Viskositätszahl von 240 bzw. 230 cm³/g aufweisen, wurden mittels C¹³-NMR (Nuclear Magnetic Resonance) auf der Basis des Verhältnisses zwischen der Anzahl von tertiären und sekundären Kohlenstoff-Atomen Norbornen-Einbauraten von 27 bzw. 41,5 mol-% bestimmt.

### Beispiel 47 (nicht erfindungsgemäß)

40 g eines gemäß Beispiels 20 hergestellten Polymers wurden bei 200°C 1 Stunde in einem Meßkneter (Fa. HAAKE) unter Inertgas (Ar) geknetet. Das Drehmoment hatte sich nach der Befüllung stabilisiert und war über die Dauer von 45 Minuten konstant geblieben.

### Beispiel 48 (nicht erfindungsgemäß)

Analog zu Beispiel 46 wurden 20 g eines gemäß Beispiels 20 hergestellten Polymers zusammen mit 20 g eines gemäß Beispiels 21 hergestellten Polymers geknetet. Die so erhaltene Legierung war transparent. Mittels DSC bei einer Aufheizrate von 20°C/min ließ sich nur eine Glasstufe bei 149°C ausmachen.

**Tabelle 1**

| Verbindung | Kurzbezeichnung |
|---|---|
| rac-Dimethylsilyl-bis-(1-indenyl)-zirkondichlorid | Metallocen A |
| rac-Dimethylgermyl-bis-(1-indenyl)-zirkondichlorid | Metallocen B |
| rac-Phenylmethylsilyl-bis-(1-indenyl)-zirkondichlorid | Metallocen C |
| rac-Phenylvinylsilyl-bis-(1-indenyl)-zirkondichlorid | Metallocen D |
| 1-Silacyclobutyl-bis-(1′-indenyl)-zirkondichlorid (Isomerenmischung: 57 % rac- Isomeres, 43 % meso-Isomeres) | Metallocen E |
| rac-Ethylen-bis-(1-indenyl)-zirkondichlorid | Metallocen F |
| rac-Diphenylsilyl-bis-(1-indenyl)-hafniumdichlorid | Metallocen G |
| rac-Phenylmethylsilyl-bis-(1-indenyl)-hafniumdichlorid | Metallocen H |
| rac-Dimethylsilyl-bis-(1-indenyl)-hafniumdichlorid | Metallocen I |
| rac-Diphenylsilyl-bis-(1-indenyl)-zirkondichlorid | Metallocen K |
| Diphenylmethylen-(9-fluorenyl)-cyclopentadienyl-zirkondichlorid | Metallocen L |
| Isopropylen-(9-fluorenyl)-cyclopentadienyl-zirkondichlorid | Metallocen M |

**Tabelle 2**

| Metallocen | Dihalogenverbindung |
|---|---|
| A | Dimethyldichlorsilan |
| B | Dimethylgermaniumdichlorid |
| | (Dimethyldichlorgerman) |
| C | Phenylmethyldichlorsilan |
| D | Phenylvinyldichlorsilan |
| E | Cyclotrimethylendichlorsilan |
| F | 1,2-Dibromethan |
| G | Diphenyldichlorsilan |
| H | Phenylmethyldichlorsilan |
| I | Dimethyldichlorsilan |
| J | Diphenyldichlorsilan |

**Tabelle 3**

| Beispiel | Metallocen | Menge Metallocen (mg) | T (°C) | Produktmenge (g) | VZ (cm³/g) | Tg (DSC) (°C) |
|---|---|---|---|---|---|---|
| 13 | B* | 31,4 | 20 | 3,3 | 337 | 23,5 |
| 14 | K* | 33,5 | 20 | 14,0 | 96 | 31,2 |
| 15 | L | 43,7 | 20 | 9,0 | 121 | 37,6 |
| 16 | M | 29,3 | 20 | 12,0 | 99 | 32,2 |

| | | | | | | |
|---|---|---|---|---|---|---|
| * nicht erfindungsgemäß | | | | | | |

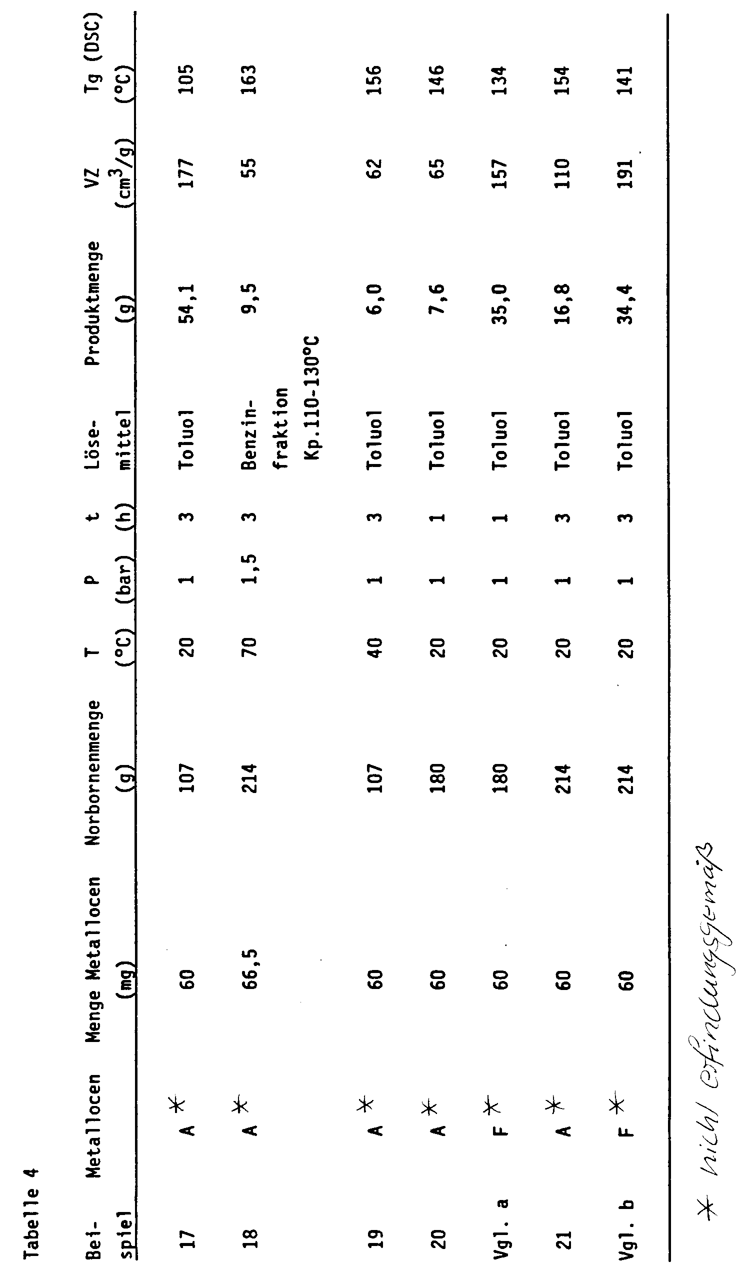

**Tabelle 5**

| Beispiel | Metallocen | Menge Metallocen (mg) | Menge Norbornen (g) | T (°C) | Produktmenge (g) | VZ (cm³/g) | Tg (DSC) (°C) |
|---|---|---|---|---|---|---|---|
| 26 | C* | 60,9 | 30 | 40 | 1,4 | 19 | 91,1 |
| 27 | D* | 51,6 | 30 | 40 | 1,5 | 22 | 89,7 |
| 28 | E* | 56,2 | 30 | 40 | 1,1 | 22 | 103,6 |
| 29 | K* | 38,0 | 30 | 40 | 2,0 | 14 | 91,8 |
| 30 | G* | 351,0 | 30 | 70 | 1,2 | 30 | 50,0 |
| 31 | H* | 100,2 | 40 | 70 | 1,1 | 26 | 48,2 |
| 32 | I* | 177,0 | 30 | 40 | 3,0 | 24 | 61,0 |
| 33 | I* | 302,0 | 30 | 50 | 7,0 | 4 | 70,4 |
| 34 | L | 30,6 | 30 | 20 | 50,0 | 14 | 26,5 |
| 35 | L | 30,1 | 40 | 40 | 110,0 | 27 | 23,7 |
| 36 | L | 15,0 | 40 | 50 | 23,0 | 4 | 62,0 |
| 37 | M | 30,3 | 80 | 20 | 1,3 | 22 | 26,6 |

| | | | | | | | |
|---|---|---|---|---|---|---|---|
| * nicht erfindungsgemäß | | | | | | | |

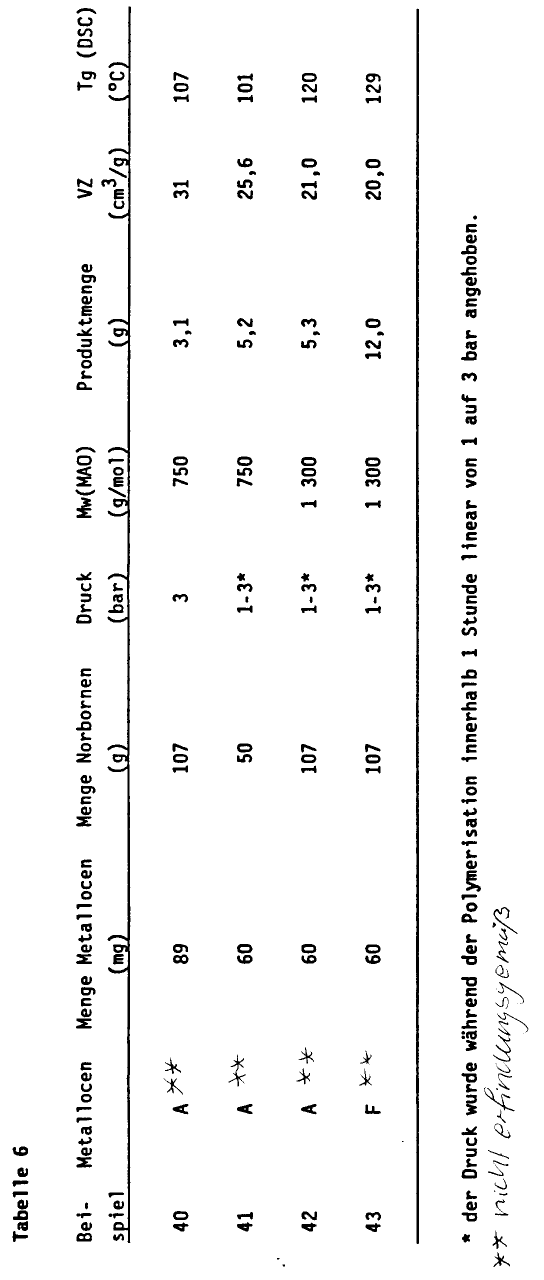

## Patentansprüche

1. Verfahren zur Herstellung eines Cycloolefinpolymers durch Polymerisation von
0,1 bis 100 Gew.-%, bezogen auf die Gesamtmenge der Monomeren, mindestens eines Monomers der Formeln I, II, III oder IV 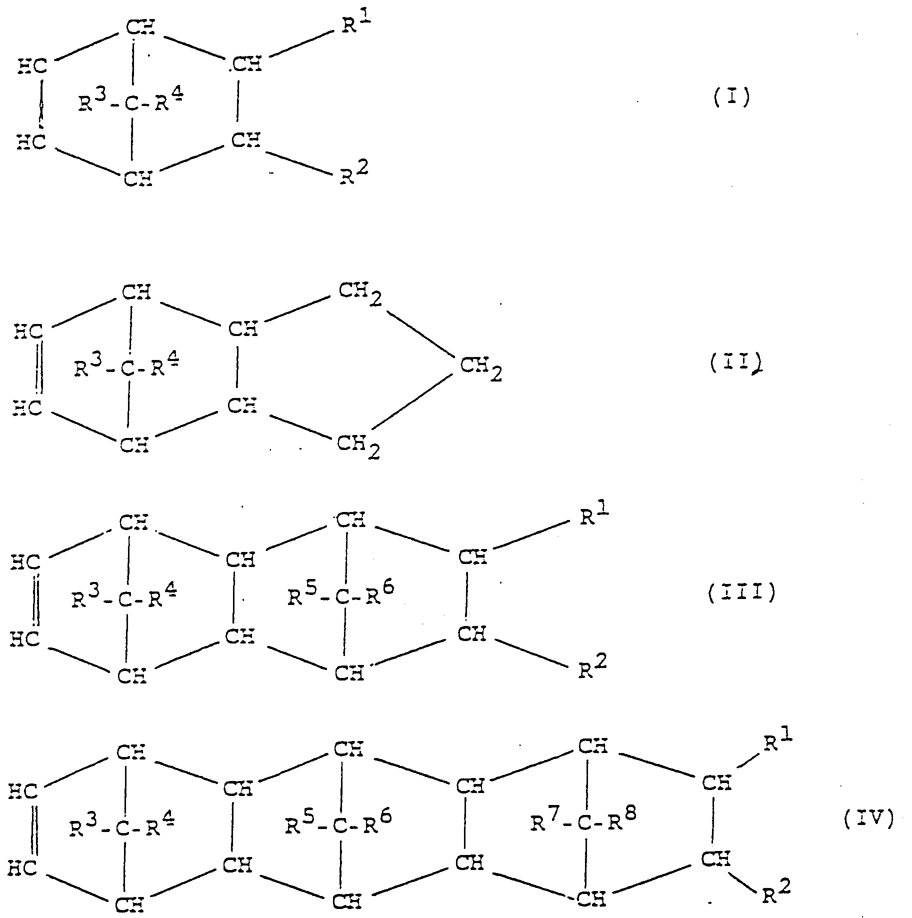 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel V 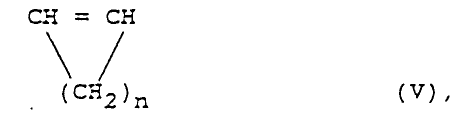 worin n eine Zahl von 2 bis 10 ist, und 0 bis 99,9 Gew.-%, bezogen auf die Gesamtmenge der Mononeren, mindestens eines acyclischen 1-Olefins der Formel VI 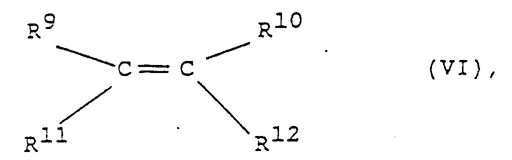 worin R⁹, R¹⁰, R¹¹ und R¹² gleich oder verschieden sind und ein Wasserstoffatom oder einen C₁-C₈-Alkylrest bedeuten, in Lösung, in Suspension, in Monomerschmelze oder in der Gasphase, bei einer Temperatur von -78 bis 150°C, bei einem Druck von 0,5 bis 64 bar, in Gegenwart eines Katalysators, welcher aus einem Metallocen als Übergangsmetallkomponente und einem Aluminoxan der Formel VII 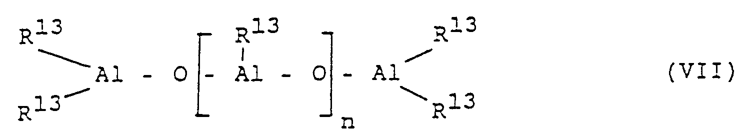 für den linearen Typ, und/oder der Formel VIII 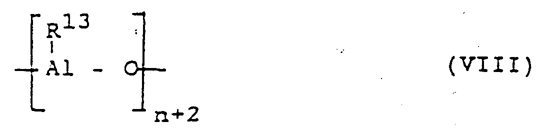 für den cyclischen Typ besteht, wobei in den Formeln VII und VIII R¹³ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel IX 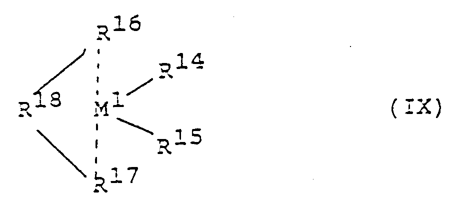 ist, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹⁶ und R¹⁷ gleich oder verschieden sind und einen ein- oder mehrkernigen Kohlenwasserstoffrest, welcher mit dem Zentralatom M¹ eine Sandwichstruktur bilden kann, bedeuten,
R¹⁸ 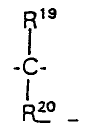 ist, wobei R¹⁹ und R²⁰ gleich oder verschieden sind und ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ jeweils mit den sie verbindenden Atomen einen Ring bilden.

2. Verfahren nach Anspruch 1, dadurch gekennzeichnet, daß als Metallocen
Diphenylmethylen-(9-fluorenyl)-cyclopentadienyl-zirkondichlorid und Isopropylen-(9-fluorenyl)-cyclopentadienyl-zirkondichlorid oder deren Gemische verwendet werden.

3. Verfahren nach Anspruch 1 oder 2, dadurch gekennzeichnet, daß das polycyclische Olefin DMON (Dimethanooctahydro-naphtalin) und das 1-Olefin Ethylen ist.

4. Verfahren nach Anspruch 1 oder 2, dadurch gekennzeichnet daß das polycyclische Olefin DMON (Dimethanooctahydro-naphtalin) und das 1-Olefin Propylen ist.

5. Verfahren nach Anspruch 1 oder 2, dadurch gekennzeichnet, daß das polycyclische Olefin Norbornen und das 1-Olefin Ethylen ist.

6. Verfahren nach Anspruch 1 oder 2, dadurch gekennzeichnet, daß das polycyclische Olefin Norbornen und das 1-Olefin Propylen ist.

## Claims

1. A process for the preparation of a cycloolefin polymer by polymerizing
0.1 to 100 % by weight, relative to the total amount of the monomers, of at least one monomer of the formulae I, II, III or IV 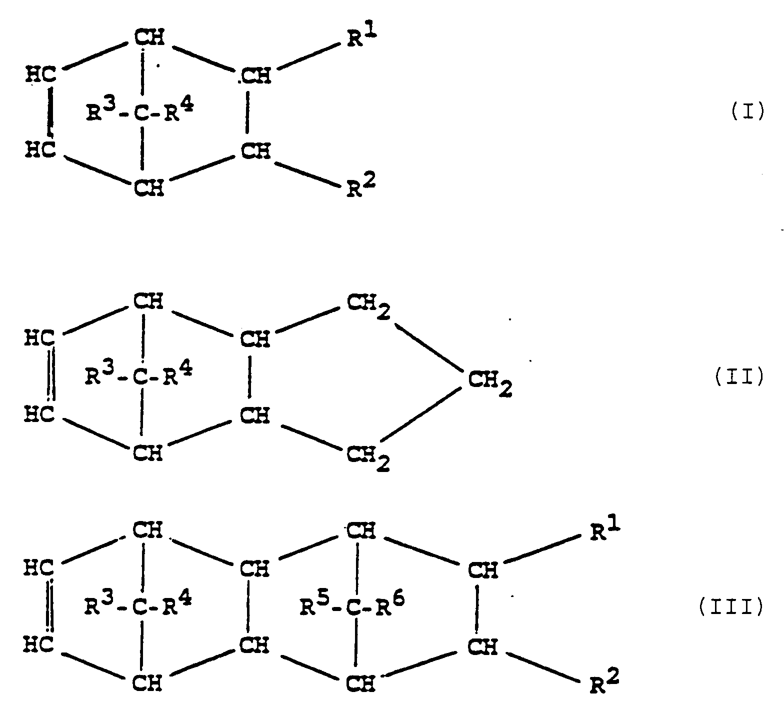 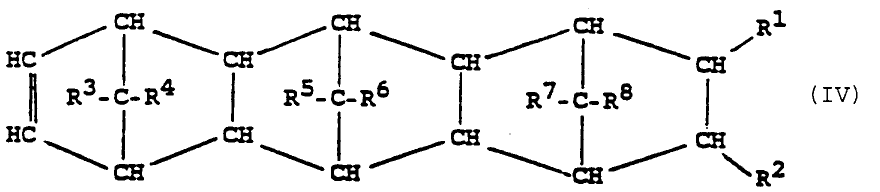 in which R¹, R², R³, R⁴, R⁵, R⁶, R⁷ and R⁸ are identical or different and denote a hydrogen atom or a C₁-C₈-alkyl radical, it being possible for identical radicals in the various formulae to have a different meaning,
0 to 99.9 % by weight, relative to the total amount of the monomers, of a cycloolefin of the formula V 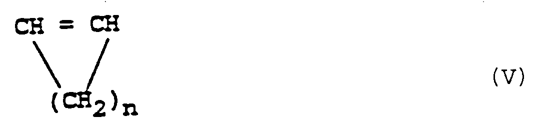 in which n is a number from 2 to 10, and
0 to 99.9 % by weight, relative to the total amount of the monomers, of at least one acyclic 1-olefin of the formula VI 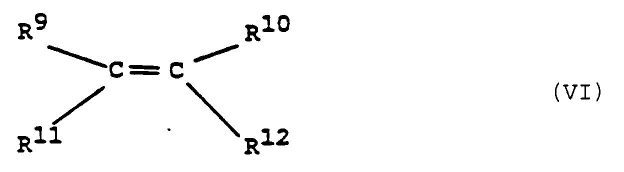 in which R⁹, R¹⁰, R¹¹ and R¹² are identical or different and denote a hydrogen atom or a C₁-C₈-alkyl radical, in solution, in suspension, in a monomer melt or in the gas phase, at a temperature of -78 to 150°C, under a pressure of 0.5 to 64 bar, in the presence of a catalyst which is composed of a metallocene as the transition metal component and an aluminoxane of the formula VII 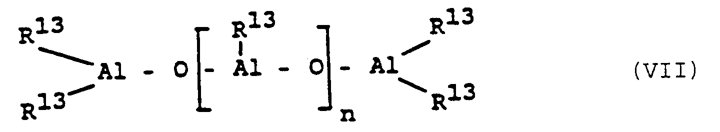 for the linear type and/or of the formula VIII 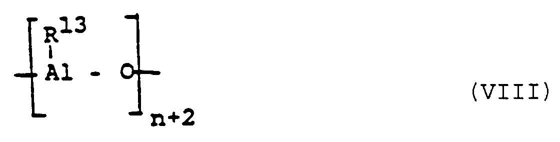 for the cyclic type, R¹³ in the formulae VII and VIII denoting a C₁-C₆-alkyl group or phenyl or benzyl and n being an integer from 2 to 50, which comprises carrying out the polymerization in the presence of a catalyst the transition metal component of which is a compound of the formula IX 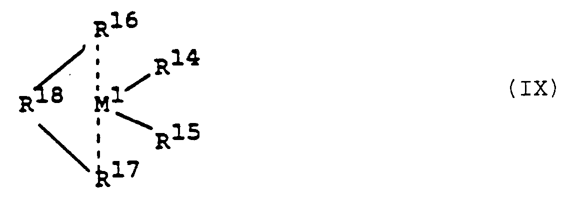 in which
M¹ is titanium, zirconium, hafnium, vanadium, niobium or tantalum,
R¹⁴ and R¹⁵ are identical or different and denote a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹⁶ and R¹⁷ are identical or different and denote a mononuclear or polynuclear hydrocarbon radical which can form a sandwich structure together with the central atom M¹,
R¹⁸ is 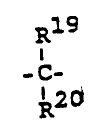 R¹⁹ and R²⁰ being identical or different and denoting a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁹ and R²⁰, in each case with the atoms linking them, forming a ring.

2. The process as claimed in claim 1, wherein the metallocene used is diphenylmethylene-(9-fluorenyl)-cyclopentadienyl-zirconium dichloride and isopropylene-(9-fluorenyl)-cyclopentadienyl-zirconium dichloride or a mixture thereof.

3. The process as claimed in claim 1 or 2, wherein the polycyclic olefin is DMON (dimethano-octahydro-naphthalene) and the 1-olefin is ethylene.

4. The process as claimed in claim 1 or 2, wherein the polycyclic olefin is DMON (dimethano-octahydro-naphthalene) and the 1-olefin is propylene.

5. The process as claimed in claim 1 or 2, wherein the polycyclic olefin is norbornene and the 1-olefin is ethylene.

6. The process as claimed in claim 1 or 2, wherein the polycyclic olefin is norbornene and the 1-olefin is propylene.

## Revendications

1. Procédé de préparation d'un polymère cyclooléfinique par polymérisation de
0,1 à 100 % en poids par rapport au poids total du monomère, au moins d'un monomère de formules I, II, III ou IV 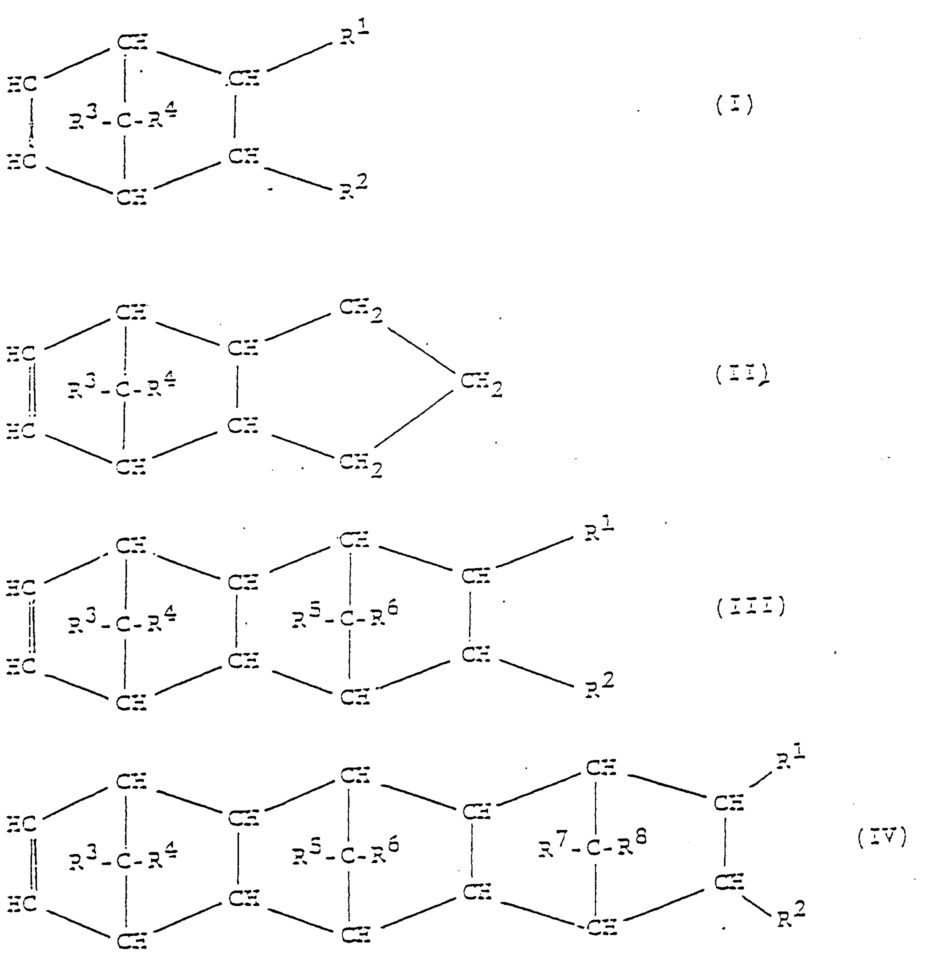 dans lesquelles R¹, R², R³, R⁴, R⁵, R⁶, R⁷ et R⁸ sont identiques ou différents et représentent un atome d'hydrogène ou un reste alkyle en C₁-C₈, les restes identiques dans les différentes formules pouvant avoir des significations différentes,
de 0 à 99,9 % en poids par rapport au poids total des monomères, d'une cyclooléfine de formule V 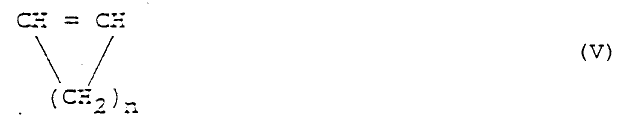 dans laquelle n est un nombre de 2 à 10, et
de 0 à 99,9 % en poids, par rapport au poids total des monomères, d'au moins une 1-oléfine acyclique de formule VI 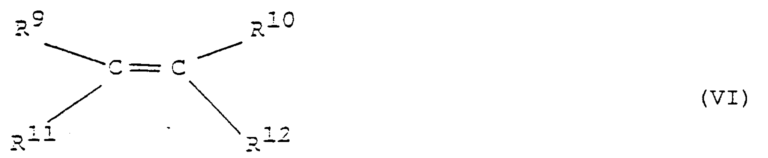 dans laquelle R⁹, R¹⁰, R¹¹ et R¹² sont identiques ou différents, et représentent un atome d'hydrogène ou un reste alkyle en C₁-C₈, en solution, en suspension ou en phase gazeuse, à une température de -78 à 150 °C, à une pression de 0,5 à 64 bars, en présence d'un catalyseur constitué d'un métallocène d'un composant à base de métal de transition et d'un aluminoxane de formule VII 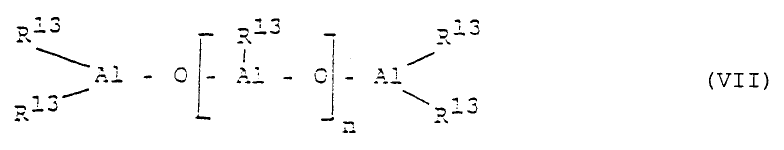 pour le type linéaire et/ou de formule VIII 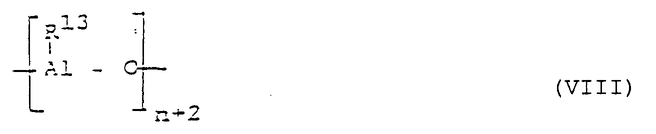 pour le type cyclique, dans les formules VII et VIII, R¹³ représente un groupe alkyle en C₁-C₆ ou phényle ou benzyle, et n est un nombre entier de 2 à 50, caractérisé en ce qu'on met en oeuvre la polymérisation en présence d'un catalyseur dont le composant à base de métal de transition est au moins un composé de formule IX 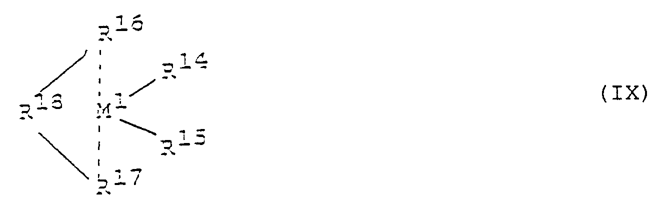 dans laquelle
M¹ représente le titane, le zirconium, l'hafnium, le vanadium, le niobium ou le tantale,
R¹⁴ et R¹⁵ sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R¹⁶ et R¹⁷ sont identiques ou différents et représentent un reste hydrocarboné mono- ou polycyclique, lequel peut former M¹ une structure sandwich avec l'atome central,
R¹⁸ représente 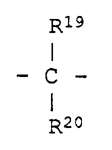 R¹⁹ et R²⁰ étant identiques ou différents, et représentent un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹⁹ et R²⁰ chacun avec les atomes qui les relient, forment un cycle.

2. Procédé selon la revendication 1, caractérisé en ce que l'on utilise comme métallocène le dichlorure de diphénylméthylène-(9-fluorényl)-cyclopentadiényl-zirconium et le dichlorure d'isoprénylène-(9-fluorényl)-cyclopentadiényl-zirconium ou leurs mélanges.

3. Procédé selon la revendication 1 ou 2, caractérisé en ce que l'oléfine polycyclique est le DMON (diméthano-octahydronaphtalène) et la 1-oléfine est l'éthylène.

4. Procédé selon la revendication 1 ou 2, caractérisé en ce que l'oléfine polycylique est le DMNO (diméthano-octahydronaphtalène) et la 1-oléfine est le propylène.

5. Procédé selon la revendication 1 ou 2, caractérisé en ce que l'oléfine polycyclique est le norbornène et la 1-oléfine est l'éthylène.

6. Procédé selon la revendication 1 ou 2, caractérisé en ce que l'oléfine polycyclique est le norbornène et la 1-oléfine est le propylène.
